# EUROPÄISCHE PATENTSCHRIFT

(11) **EP 2 606 246 B1**
(45) Veröffentlichungstag und Bekanntmachung des Hinweises auf die Patenterteilung: **08.04.2015**
(21) Anmeldenummer: 11729547.7
(22) Anmeldetag: 18.05.2011
(51) Int. Cl.: F16C 29/02, F16C 29/04, F16C 33/46, F16C 33/54, B60N 2/48, F16C 29/12, F16C 33/26

(54) **TRAPEZOIDES BAUTEIL, LINEARFÜHRUNG UND KOPFSTÜTZE**
TRAPEZOIDAL SHAPED ELEMENT, LINEAR GUIDE AND HEADREST
ÉLÉMENT DE FORME TAPEZOIDALE, GUIDE LINÉAIRE ET APPUI-TÊTE

(30) Priorität: 20.08.2010 DE 102010035031; 17.08.2010 DE 102010034635
(43) Veröffentlichungstag der Anmeldung: 26.06.2013
(73) Patentinhaber: Johnson Controls GmbH, 51399 Burscheid (DE)
(72) Erfinder: GOTTWALD, Martin, 51381 Leverkusen (DE); DILLINGER, Thomas, 40880 Ratingen (DE); POTISCH, Robby, 51399 Burscheid (DE)
(74) Vertreter: Wolff, Felix
(86) Internationale Anmeldenummer: PCT/EP2011/002456
(87) Internationale Veröffentlichungsnummer: WO 2012/022386

(56) Entgegenhaltungen:
- EP-A2- 0 974 484
- WO-A1-01/32054
- DE-A1- 3 608 184
- DE-B4- 10 300 876
- DE-U1- 20 014 397
- US-B1- 6 189 843

## Beschreibung

Die vorliegende Erfindung betrifft ein trapezoides Bauteil mit einem Basiselement und zwei Schenkeln, die jeweils in einem Übergangsbereich mit dem Basiselement verbunden sind. Des Weiteren betrifft die vorliegende Erfindung eine Linearführung sowie eine Kopfstütze aufweisend eine derartige Linearführung.

Trapezoide Bauteile werden im Fahrzeuginnenausstattungsbereich üblicherweise zur Lenksäulen-Tiefenverstellung oder zur Kopfstützeneinstellung eingesetzt, wie beispielsweise der DE 11 2006 003 427 B4 oder der EP 1 194 326 B1 entnommen werden kann. Die dort beschriebenen trapezoiden Bauteile sind jedoch vergleichsweise kompliziert aufgebaut.

Es war deshalb die Aufgabe der vorliegenden Erfindung ein trapezoides Bauteil zur Verfügung zu stellen, das möglichst effizient und günstig herzustellen ist.

Gelöst wird die Aufgabe mit einem trapezoiden Bauteil, das ein Basiselement und zwei Schenkel aufweist, die jeweils in einem Übergangsbereich mit dem Basiselement verbunden sind, wobei der Übergangsbereich eine geringere Materialdicke aufweist als das Basiselement und/oder die Schenkel.

Erfindungsgemäß weist das Bauteil mindestens ein Gleitelement auf.

Durch dieses Gleitelement wird der Reibungswiderstand beim Verschieben des Bauteils relativ zu einem anderen Bauteil reduziert. Das Gleitelement ist zumindest abschnittsweise konvex gestaltet, wodurch insbesondere die Kontaktfläche des Gleitelements zu einem anderen Element reduziert wird.

Erfindungsgemäß weist das Gleitelement zusätzlich ein Federmittel auf. Dadurch kann das Bauteil gegen ein anderes Bauteil gespannt und/oder es können Fertigungstoleranzen ausgeglichen werden. Das Federmittel besteht aus einer oder mehreren vorgewölbten Blattfedern, welche vorzugsweise tangential an einem Bauteil, beispielsweise einer Schiene, anliegen. Die Federmittel sind mit besonderem Vorteil einstückig mit dem Gleitelement ausgebildet, vorzugsweise durch Spritzgießen von Kunststoff.

Das Gleitelement ist vorzugsweise schubfest an dem Bauteil befestigt oder zwischen zwei Bauteilen gleitend vorgesehen. Mit besonderem Vorteil sind die Gleitelement durch Formschluss, insbesondere rastend, an dem Bauteil befestigt. Vorzugsweise besteht das Gleitelement aus einem Kunststoff mit einem niedrigen Reibkoeffizienten, beispielsweise Polyoxymethylen (POM), Polyamid (PA) und/oder deren Mischung.

Erfindungsgemäß sind am Basiselement und an den Schenkeln weiter jeweils ein Wälzkörper und ein Gleitelement vorgesehen.

Die vorliegende Erfindung betrifft ein trapezoides Bauteil, das beispielsweise als Linearführung im Automobilinnenausstattungsbereich eingesetzt wird. Das Bauteil weist einen trapezoiden Querschnitt mit einem Basiselement und zwei Schenkeln auf, wobei die Schenkel im Gegensatz zu einem U-Profil nicht senkrecht von dem Basiselement abstehen, sondern nach innen gebogen sind. Im Übergangsbereich zwischen dem Basiselement und den Schenkeln ist ein Deformationsbereich angeordnet, in dem die Materialstärke geringer ist als in dem Basis- bzw. in dem Schenkelbereich und der plastisch verformt ist. Dadurch kann das erfindungsgemäße Bauteil, insbesondere das Basiselement und die Schenkel, als flächiges ebenes Bauteil spritzgegossen oder gespritzt und danach durch plastisches Verformen in seine trapezoide Form verbracht werden. Vorzugsweise erfolgt dies indem die Deformationsbereiche erwärmt und das Material des Bauteils dann in die trapezoide Form plastisch geformt wird. Nach dem Abkühlen verbleibt das erfindungsgemäße Bauteil in seiner Form. Das erfindungsgemäße Bauteil kann aber auch auf eine andere Weise beispielsweise durch Strangextrusion oder durch Stanzen eines ebenen Halbzeuges und anschließendes Umformen des Halbzeuges in die trapezoide Form hergestellt werden. Vorzugsweise handelt es sich bei dem Bauteil um einen Kunststoff- insbesondere um ein Kunststoffspritzteil.

Gemäß einer bevorzugten Ausbildung des erfindungsgemäßen Gegenstands der vorliegenden Erfindung weist das Bauteil eine Vielzahl von Wälzkörpern auf, die drehbar und vorzugsweise rastend an dem Bauteil angeordnet sind. Dadurch ist eine einfache, vorzugsweise werkzeugfreie Montage der Wälzkörper an dem Bauteil möglich. Die Wälzkörper können beispielsweise Zylinder, Kegel und/oder Kugeln sein. Vorzugsweise werden diese Wälzkörper durch einen Rast-/Schnappverschluss mit dem Bauteil verbunden, wobei diese Lagerung eine Drehung jedes Wälzkörpers um mindestens eine Raumachse erlaubt.

Die zu diesem erfindungsgemäßen Gegenstand der vorliegenden Erfindung gemachten Ausführungen gelten für die anderen Gegenstände der vorliegenden Erfindung gleichermaßen und umgekehrt.

Vorzugsweise weist jeder Wälzkörper mindestens eine Einbuchtung auf, die mit einer komplementären Ausbuchtung an dem Bauteil rastend zusammenwirkt.

Gemäß einem anderen bevorzugten Gegenstand der vorliegenden Erfindung weist jeder Wälzkörper mindestens eine Ausbuchtung, beispielsweise einen Lagerstift, auf, mittels derer der Wälzkörper an dem Bauteil rastend vorgesehen ist.

Vorzugsweise weist jeder Wälzkörper zwei Ein- und/oder Ausbuchtungen auf, die vorzugsweise an gegenüberliegenden Seiten des Wälzkörpers vorgesehen sind.

Das erfindungsgemäße Bauteil ist vorzugsweise Teil einer Linearführung, bei der zwei Schienen relativ zueinander verschoben werden.

Ein weiterer Gegenstand der vorliegenden Erfindung ist deshalb eine Linearführung vorzugsweise aufweisend das erfindungsgemäße trapezoide Bauteil.

Die zu diesem erfindungsgemäßen Gegenstand der vorliegenden Erfindung gemachten Ausführungen gelten für die anderen Gegenstände der vorliegenden Erfindung gleichermaßen und umgekehrt.

Derartige Linearführungen bestehen in der Regel aus zwei Schienen, die relativ zueinander verschoben werden. Zwischen den Schienen kann ein Wälzlagerkäfig vorgesehen werden.

Bei dem erfindungsgemäßen trapezoiden Bauteil handelt es sich vorzugsweise um eine derartige Schiene und/oder um einen derartigen Wälzlagerkäfig, der zwischen zwei Schienen vorgesehen ist.

Ein weiterer Gegenstand der vorliegenden Erfindung ist deshalb ein Fahrzeuginnenausstattungsteil aufweisend die erfindungsgemäße Linearführung.

Die zu diesem erfindungsgemäßen Gegenstand der vorliegenden Erfindung gemachten Ausführungen gelten für die anderen Gegenstände der vorliegenden Erfindung gleichermaßen und umgekehrt.

Vorzugsweise ist das Fahrzeuginnenausstattungsteil eine Kopfstütze, bei der ein erstes Teil, beispielsweise die Kopfanlagefläche, relativ zu einem zweiten Teil, beispielsweise ein Grundkörper, verstellbar ist. Bei dieser Kopfstütze ist die erfindungsgemäße Linearverstellung vorzugsweise zwischen der Kopfanlagefläche und dem Grundkörper der Kopfstütze zum Zwecke der Tiefenverstellung (X-Richtung des Fahrzeugs) angeordnet. Dabei wird vorzugsweise eine der Schienen (Außenschiene oder Innenschiene) am Polsterteil und die andere Schiene (Innenschiene oder Außenschiene) am Grundkörper der Kopfstütze oder an den Kopfstützhaltestangen befestigt. Durch die trapezoide Form wird neben der Längsverstellung auch eine Verdrehsicherung ermöglicht. Insbesondere ist vorgesehen, das Schienensystem mit einer unmittelbar zwischen den Schienen wirkenden, zum Zwecke der Verstellung temporär lösbare Verriegelung auszustatten. Alternativ kann beispielsweise auch eine Verriegelung unmittelbar zwischen Polsterteil und Grundkörper vorgesehen werden.

Im Folgenden wird die Erfindung anhand der Figuren 1 bis 7 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
**Figur 1** zeigt die erfindungsgemäße Kopfstütze.
**Figur 2** zeigt eine Linearführung mit einem Gleitmittel.
**Figur 3** zeigt das Gleitmittel.
**Figur 4** zeigt eine Ausführungsform des trapezoiden Bauteils.
**Figuren 5 bis 7** zeigen Ausführungsformen des Rastmechanismus, mit dem die Wälzkörper an dem trapezoiden Bauteil vorgesehen sind.

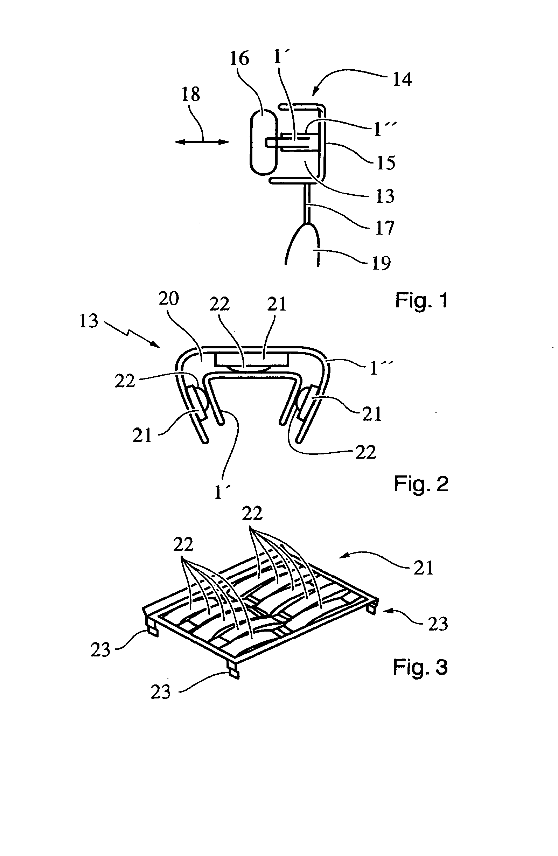

**Figur 1** zeigt die erfindungsgemäße Kopfstütze 14. Die erfindungsgemäße Kopfstütze ist mittels Haltestangen 17, beispielsweise an der Rückenlehne 19 eines Fahrzeugsitzes vorgesehen und weist eine hintere Schale 15, einen Grundkörper, und eine Kopfanlagefläche 16 auf, die relativ zu der hinteren Schale 15 längsverschieblich vorgesehen ist, so dass sie in Richtung 18 (X-Richtung) des Kopfes eines Fahrzeugsitzinsassen hin und davon weg aus Komfort- und/oder Sicherheitsgründen bewegbar ist. Dafür weist die Kopfstütze eine Linearführung 13 auf, die in dem vorliegenden Fall aus zwei trapezoiden Schienen 1',1" besteht, wobei die Schiene 1' mit der hinteren Schale 15 und die Schiene 1" mit der Kopfanlagefläche 16 verbunden ist. Durch die beiden ineinander gesteckten trapezoiden Schienen 1', 1" ist die Kopfanlagefläche axial und verdrehsicher geführt, so dass in der Regel eine Linearführung 13 ausreichend ist. Es können jedoch auch zwei oder mehr Linearführungen 13 vorgesehen sein. Des Weiteren erkennt der Fachmann, dass die Kopfstütze 14 auch insgesamt relativ zu den Stangen 17 verschoben werden können. An mindestens einer der beiden Schienen und/oder bedarfsweise an einem Wälzlagerkäfig, der zwischen den Schienen 1', 1" angeordnet ist, sind Wälzkörper 6, insbesondere zylindrische Wälzkörper und Gleitelemente 21 vorgesehen, um die Reibung bei der Längsverstellung zu reduzieren.

Wie in **Figur 2** dargestellt, besteht die Linearführung 13 hier aus einer äußeren trapezoidalen Schiene 1" und einer inneren trapezoidalen Schiene 1', die zueinander gleitend längsverschiebbar sind. Im Spalt 20 zwischen den Schienen 1", 1' sind an den Innenflächen der äußeren Schiene 1" Gleitelemente 21 befestigt, die mit gegen die Außenfläche der inneren Schiene 1' spannenden Federmitteln 22 ausgestattet sind. Die Anordnung der Gleitelement 21 ist derart vorgesehen, dass diese zwischen drei zueinander weisenden Flächen der Schienen 1', 1" angeordnet sind. Die Federmittel 22 spannen die innere Schiene 1' gegen die äußere Schiene vor. Dadurch können Fertigungstoleranzen ausgeglichen und Geräusche vermieden werden.

Wie aus **Figur 3** ersichtlich, sind die Gleitelemente 21vorzugsweise blockartig ausgebildet und mit einem Befestigungsmittel, beispielsweise Rastzungen 23, ausgestattet, mittels dem sie formschlüssig und/oder schubfest in entsprechende Ausnehmungen in der Schiene 1" beispielsweise eingerastet werden können. Auf seiner der inneren Schiene 1' zugewandten Oberfläche weist jedes Gleitelement 21 vorzugsweise eine Vielzahl von vorzugsweise einstückig angeformten Federelementen 13, hier Blattfedern, auf, welche nach dem Einbau tangential und mit Vorspannung an der Außenfläche der inneren Schiene 1' anliegen. Hierdurch werden bei niedriger Reibung Toleranzen im Spalt 20 kompensiert.

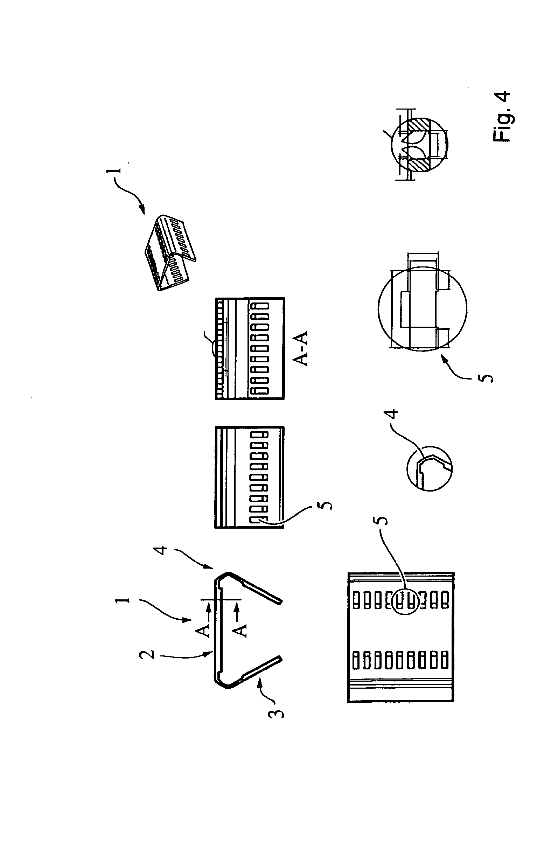

**Figur 4** zeigt eine weitere Ausführungsform des trapezoiden Bauteils 1, hier ein Wälzlagerkäfig, der ein Basiselement 2 aufweist, an dem rechts und links jeweils ein Schenkel 3 vorgesehen ist. Dieser Schenkel 3 ist im Vergleich zu einem U-Profil jeweils plastisch nach innen gebogen, so dass sich der trapezoide Querschnitt des Bauteils 1 ergibt. Im Übergang zwischen den Basiselement und dem jeweiligen Schenkel weist das erfindungsgemäße Bauteil einen Deformationsbereich 4 auf, in dem es eine geringere Materialdicke als im Basis- bzw. Schenkelbereich aufweist. Vorzugsweise handelt es sich bei dem Deformationsbereich um ein Filmscharnier. Dadurch kann das Bauteil, insbesondere das Basiselement und die Schenkel, das vorzugsweise aus Kunststoff besteht, zunächst als ebenes Bauteil spritzgegossen oder gespritzt werden. Danach wird das Bauteil dann plastisch in seine in Figur 1 dargestellte Form gebogen. Erfindungsgemäß wird dazu der Deformationsbereich 4 bis zur Plastifizierungstemperatur erhitzt, damit nach einem Abkühlvorgang das Bauteil in seiner trapezoiden Form verbleibt. Durch diese Herstellungsweise ist es möglich, das erfindungsgemäße Bauteil mit einem vergleichsweise einfachen Spritzwerkzeug herzustellen. Wie des Weiteren in Figur 4 zu erkennen ist, weist das Bauteil eine Vielzahl von Ausnehmungen 5 auf, die im Bereich derer Wälzkörper angeordnet sind. Diese Wälzkörper werden sowohl an dem Basiselement 2 als auch an den beiden Schenkeln 3 vorgesehen. Die Wälzkörper werden vorzugsweise im Innenbereich des Querschnitts des Bauteils 1 vorgesehen, können sich jedoch zumindest partiell durch oder in die Ausnehmungen 5 erstrecken. Bei dem dargestellten Bauteil 1 kann es sich auch um eine Schiene 1', 1" einer Linearführung 13 (vgl. Figuren 1 und 2) handeln, an der Wälzkörper 6, wie oben beschrieben, vorgesehen sind. In diesem Fall kann wahlweise auf einen Wälzlagerkäfig verzichtet werden.

Vorzugsweise oder gemäß einem weiteren Gegenstand der vorliegenden Erfindung werden die Wälzkörper 6 durch einen Rast-/Schnappmechanismus an dem Bauteil 1, 1', 1" befestigt, so dass dieser Montagevorgang vergleichsweise einfach, insbesondere werkzeugfrei, erfolgt.

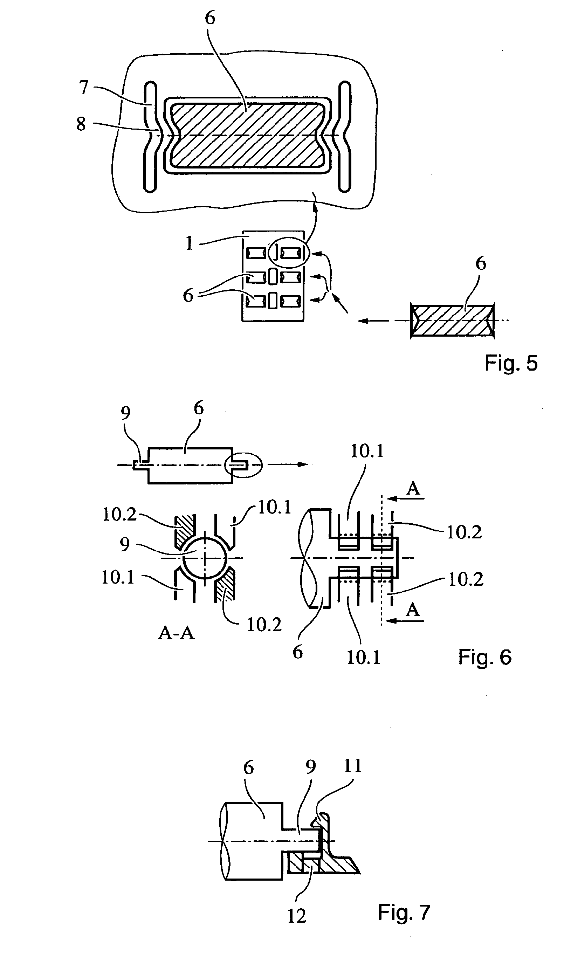

**Figur 5** zeigt eine erste Ausführungsform eines derartigen Rast-Schnappmechanismus. Einstückig mit dem Bauteil 1 sind pro Wälzkörper zwei Stege 7 vorgesehen, die eine Ausbuchtung 8 aufweisen. Diese Ausbuchtung 8 wirkt jeweils mit einer Einbuchtung in der Stirnfläche des Wälzkörpers 6 zumindest teilweise formschlüssig zusammen und stellt dadurch eine Drehachse für den Wälzkörper dar. Der Wälzkörper kann auch als Hohlelement, beispielweise zylindrisches Hohlelement gestaltet sein.

**Figur 6** zeigt eine weitere Befestigungsmöglichkeit der Wälzkörper 6 an dem Bauteil 1, 1', 1". In dem vorliegenden Fall weist der Wälzkörper 6, hier ein Zylinder, Ausbuchtungen 9, hier Lagerstifte 9 auf, die jeweils an der Stirnseite des Zylinders vorgesehen sind. Diese Lagerstifte werden jeweils auf vier Lagerstege 10.1, 10.2 gelagert, indem der Lagerstift 9 in diese einrastet. Die Lagerstege 10.1, 10.2 sind einstückig mit dem Bauteil 1, 1', 1" vorgesehen. Wie insbesondere dem Schnitt A-A entnommen werden kann, sind die Lagerstege 10.1 und 10.2 hier zumindest teilweise versetzt zueinander vorgesehen, wobei sich die Lagerstege 10.1 und 10.2 jeweils in einer Ebene befinden. Durch diesen Versatz ist es möglich auf komplizierte Hinterschnitte bei dem erfindungsgemäßen Bauteil zu verzichten. Dadurch kann das Bauteil als Kunststoffspritzteil gefertigt werden.

**Figur 7** zeigt eine weitere Möglichkeit der Rastverbindung des Wälzkörpers in dem Bauteil. In dem vorliegenden Fall ist der Lagerstift 9 mittels eines Rastmittels 11 hier eines Clips an dem Bauteil befestigt. Dieser Clip weist eine Nase auf, der den Wälzkörper an dem Bauteil befestigt. Dieses Bauteil weist eine Ausnehmung 12 unterhalb der Rastnase auf, durch die es möglich ist ein Element der Form, die benötigt wird um den Hinterschnitt der Rastnase zu erzeugen, zu entfernen.

### Bezugszeichen:

- 1: Bauteil, Schiene, Wälzlagerkäfig,
- 1': erste Schiene, Innenschiene
- 1": zweite Schiene, Außenschiene
- 2: Basiselement
- 3: Schenkel
- 4: Deformationsbereich
- 5: Ausnehmung
- 6: Wälzkörper, Rolle
- 7: Ausbuchtung, Steg
- 8: Ausbuchtung
- 9: Lagerstift
- 10: Lagersteg
- 11: Rastmittel, Clip
- 12: Ausnehmung
- 13: Verstellsystem, Linearführung
- 14: Kopfstütze
- 15: hintere Schale, Grundkörper
- 16: Kopfanlagefläche, Kopfstützenpolster
- 17: Haltestange
- 18: Verschiebung der Kopfanlagefläche 16 allein oder der gesamten Kopfstütze 14
- 19: Rückenlehne
- 20: Spalt
- 21: Gleitelement
- 22: Federmittel, Blattfeder
- 23: Befestigungsmittel

## Patentansprüche

1. Trapezoides Bauteil (1, 1', 1") mit einem Basiselement (2) und zwei Schenkeln (3), die jeweils in einem Übergangsbereich (4) mit dem Basiselement (2) verbunden sind, wobei der Übergangsbereich eine geringere Materialdicke aufweist als das Basiselement (2) und/oder die Schenkel (3), wobei das trapezoide Bauteil (1, 1', 1") mindestens ein Gleitelement (21) aufweist, **dadurch gekennzeichnet, dass** das Gleitelement (21) ein Federmittel (22) aufweist, das aus einer oder mehreren vorgewölbten Blattfedern besteht, wobei am Basiselement (2) und an den Schenkeln (3) jeweils ein Wälzkörper (6) und ein Gleitelement (21) vorgesehen ist.

2. Trapezoides Bauteil (1, 1', 1") nach Patentanspruch 1, **dadurch gekennzeichnet, dass** es Wälzkörper (6) aufweist, die rastend an dem Bauteil (1) angeordnet sind.

3. Trapezoides Bauteil (1, 1',1") nach Anspruch 2, **dadurch gekennzeichnet, dass** jeder Wälzkörper (6) mindestens eine Einbuchtung aufweist, die mit einer komplementären Ausbuchtung (8) an dem Bauteil (1) rastend zusammenwirkt.

4. Trapezoides Bauteil (1, 1', 1 ") nach Anspruch 2, **dadurch gekennzeichnet, dass** jeder Wälzkörper (6) mindestens eine Ausbuchtung (9) aufweist, mit der der Wälzkörper (6) an dem Bauteil (1) rastend vorgesehen ist.

5. Linearführung (13) aufweisend ein trapezoides Bauteil (1, 1', 1") nach einem der voranstehenden Ansprüche.

6. Linearführung (13) aufweisend zwei Schienen (1', 1 "), die relativ zueinander verschiebbar vorgesehen sind, **dadurch gekennzeichnet, dass** mindestens eine Schiene (1', 1 ") ein trapezoides Bauteil (1, 1', 1") gemäß einem der voranstehenden Ansprüche 1 bis 4 ist.

7. Linearführung (13) aufweisend zwei Schienen (1', 1"), die relativ zueinander verschiebbar vorgesehen sind, **dadurch gekennzeichnet, dass** zwischen den Schienen (1', 1") ein Wälzlagerkäfig vorgesehen ist, der als trapezoides Bauteil gemäß einem der voranstehenden Ansprüche 1 bis 4 gestaltet ist.

8. Fahrzeuginnenausstattungsteil aufweisend eine Linearführung gemäß einem der voranstehenden Ansprüche 5 bis 7.

9. Fahrzeuginnenausstattungsteil nach Anspruch 8, **dadurch gekennzeichnet, dass** es eine Kopfstütze (14) ist, bei der die Kopfanlagefläche (16) relativ zu einem Grundkörper (15) verstellbar ist.

## Claims

1. Trapezoidal component (1, 1', 1'') having a base element (2) and two arms (3), each of which is connected to the base element (2) in a transition region (4), wherein the transition region has a smaller material thickness than the base element (2) and/or the arms (3), wherein the trapezoidal component (1, 1', 1") has at least one sliding element (21), **characterized in that** the sliding element (21) has a spring means (22) which consists of one or more curved leaf springs, wherein a rolling body (6) and a sliding element (21) are in each case provided on the base element (2) and on the arms (3).

2. Trapezoidal component (1, 1', 1") according to Claim 1, **characterized in that** it has rolling bodies (6) that are arranged in latching fashion on the component (1).

3. Trapezoidal component (1, 1', 1") according to Claim 2, **characterized in that** each rolling body (6) has at least one indentation that interacts in latching fashion with a complementary bulge (8) on the component (1).

4. Trapezoidal component (1, 1', 1") according to Claim 2, **characterized in that** each rolling body (6) has at least one bulge (9) by means of which the rolling body (6) is provided in latching fashion on the component (1).

5. Linear guide (13) having a trapezoidal component (1, 1', 1") according to one of the preceding claims.

6. Linear guide (13) having two rails (1', 1") that are provided so that they can be displaced relative to each other, **characterized in that** at least one rail (1', 1") is a trapezoidal component (1, 1', 1") according to one of the preceding Claims 1 to 4.

7. Linear guide (13) having two rails (1', 1") that are provided so that they can be displaced relative to each other, **characterized in that** a roller bearing cage is provided between the rails (1', 1") that takes the form of a trapezoidal component according to one of the preceding Claims 1 to 4.

8. Vehicle interior design part having a linear guide according to one of the preceding Claims 5 to 7.

9. Vehicle interior design part according to Claim 8, **characterized in that** it is a head restraint (14) in which the headrest surface (16) can be adjusted relative to a base body (15).

## Revendications

1. Composant trapézoïdal (1, 1', 1") comprenant un élément de base (2) et deux branches (3) qui sont reliées respectivement à l'élément de base (2) dans une région de transition (4), la région de transition présentant une plus petite épaisseur de matériau que l'élément de base (2) et/ou les branches (3), le composant trapézoïdal (1, 1', 1") comprenant au moins un élément de glissement (21), **caractérisé en ce que** l'élément de glissement (21) comprend un moyen de ressort (22) qui est constitué d'un ou de plusieurs ressorts à lame pré-cintrés, un corps de roulement (6) et un élément de glissement (21) étant respectivement prévus sur l'élément de base (2) et sur les branches (3).

2. Composant trapézoïdal (1, 1', 1'') selon la revendication 1, **caractérisé en ce qu'**il comprend des corps de roulement (6) qui sont disposés de manière encliquetée sur le composant (1).

3. Composant trapézoïdal (1, 1', 1'') selon la revendication 2, **caractérisé en ce que** chaque corps de roulement (6) comprend au moins une indentation qui coopère par encliquetage avec un renflement complémentaire (8) sur le composant (1).

4. Composant trapézoïdal (1, 1', 1'') selon la revendication 2, **caractérisé en ce que** chaque corps de roulement (6) comprend au moins un renflement (9), à l'aide duquel le corps de roulement (6) est prévu de manière encliquetée sur le composant (1).

5. Guide linéaire (13) comprenant un composant trapézoïdal (1, 1', 1") selon l'une quelconque des revendications précédentes.

6. Guide linéaire (13) comprenant deux rails (1', 1'') qui sont prévus de manière déplaçable l'un par rapport à l'autre, **caractérisé en ce qu'**au moins un rail (1', 1'') est un composant trapézoïdal (1, 1', 1") selon l'une quelconque des revendications précédentes 1 à 4.

7. Guide linéaire (13) comprenant deux branches (1', 1'') qui sont prévues de manière déplaçable l'une par rapport à l'autre, **caractérisé en ce qu'**une cage de palier à roulement est prévue entre les rails (1', 1''), laquelle est configurée sous forme de composant trapézoïdal selon l'une quelconque des revendications précédentes 1 à 4.

8. Partie d'équipement intérieur de véhicule comprenant un guide linéaire selon l'une quelconque des revendications précédentes 5 à 7.

9. Partie d'équipement intérieur de véhicule selon la revendication 8, **caractérisée en ce qu'**elle est un appui-tête (14), dans lequel la surface d'appui de tête (16) est réglable par rapport à un corps de base (15).
